# EUROPÄISCHE PATENTANMELDUNG

(11) **EP 2 014 400 A1**
(43) Veröffentlichungstag der Anmeldung: **14.01.2009**
(21) Anmeldenummer: 07022615.4
(22) Anmeldetag: 21.11.2007
(51) Int. Cl.: B23K 5/213, B23K 9/235, B23K 26/42

(54) **Vorrichtung und Verfahren zum Schweissen von metallischen Werkstücken**

(30) Priorität: 10.07.2007 DE 102007032067
(71) Anmelder: Linde AG, 80807 München (DE)
(72) Erfinder: Matz, Christoph, 85716 Unterschleissheim (DE); Miklos, Ernst, 85551 Kirchheim (DE); Rebhan, Dieter, 82538 Geretsried-Gelting (DE)
(74) Vertreter: Schüssler, Andrea

(57) **Zusammenfassung**

Erfindungsgemäß ist eine Schweißvorrichtung zum Schweißen von metallischen Werkstücken vorgesehen. Die Schweißvorrichtung weist eine Schweißeinrichtung (2) zum Erzeugen einer Schweißnaht (3) auf Werkstücken (6) und eine Reinigungsdüse (7), um ein cryogenes Medium (8) auf die Oberflächen (5) der Werkstücke (6) im Bereich ihrer auszubildenden Schweißnaht abzustrahlen, auf.

## Beschreibung

Die vorliegende Erfindung betrifft eine Vorrichtung und ein Verfahren zum Schweißen von metallischen Werkstücken.

Beim Schweißen werden Bauteile unter Anwendung von Wärme oder Druck mit oder ohne Schweißzusätze unlösbar miteinander verbunden. Schweißverfahren, die mit Wärme arbeiten, sind beispielsweise Feuerschweißen, Gasschmelzschweißen, Lichtbogenhandschweißen, Widerstandsschweißen, Laserstrahlschweißen, aluminothermisches Schweißen und Elektronenstrahlschweißen.

Häufig werden tiefgezogene bzw. hochdruckumgeformte Bauteile mittels Schweißverfahren weiterbearbeitet.

Beim Tiefziehen wird ein Blechzuschnitt in einen einseitig offenen Hohlkörper oder ein vorgezogener Hohlkörper in einen Hohlkörper mit geringerem Querschnitt und ohne gewollte Veränderung der Blechdicke zugdruckumgeformt.

Um Ziehfehler, insbesondere das Reißen des Werkstoffs auch bei höheren Umformgraden zu verhindern, werden Ziehmittel, beispielsweise Fette, Öle, Seifen und Überzüge, verwendet. Dadurch werden die Verschleißerscheinungen am Werkzeug vermindert und die Oberflächenbeschaffenheit des Werkstücks verbessert. Diese Ziehmittel hinterlassen nach dem Umformprozess Rückstände auf der Oberfläche. Zum Schweißen der geformten Teile müssen diese von den Ziehmittelrückständen gereinigt werden, da die Ziehmittelsubstanzen eine hochwertige Verschweißung nicht zulassen. Das Entfernen der Ziehmittel durch Waschen oder Beizen ist sehr aufwändig und umweltbelastend, da das gesamte Bauteil gereinigt werden muss.

Beim Hochdruckumformen kann es passieren, dass die Ziehmittel so tief in die Aluminiumoberfläche eingepresst werden, dass ein vollständiges Entfernen durch Waschen oder Beizen nicht mehr möglich ist. Dies führt bei der weiteren Bearbeitung, beispielsweise beim Fügen durch Schweißen, zu Schweißnahtfehlern.

Zur Oberflächenreinigung ist das Reinigen mit CO₂-Pellets und CO₂-Strahl bekannt. Die Temperatur derartiger cryogener Medien beträgt von -50°C bis zu -196°C.

Aufgabe der Erfindung ist es ein Verfahren und eine Vorrichtung bereitzustellen, mit denen es möglich ist, dass Ziehmittelrückstände auf einer Werkstückoberfläche entfernt werden, ohne dass das gesamtes Werkstück gereinigt werden muss. Zudem sollen Rückstände entfernt werden, die durch Beizen oder Waschen nicht entfernt werden können.

Die Aufgabe wird mit einer Vorrichtung mit den Merkmalen des Anspruchs 1 und einem Verfahren mit den Merkmalen des Anspruchs 12 gelöst.

Vorteilhafte Weiterbildungen sind in den jeweiligen Unteransprüchen angegeben.

Erfindungsgemäß ist eine Schweißvorrichtung zum Schweißen von metallischen Werkstücken vorgesehen. Die Schweißvorrichtung weist eine Schweißeinrichtung zum Erzeugen einer Schweißnaht auf Werkstücken und eine Düse, um ein cryogenes Medium auf die Oberflächen der Werkstücke im Bereich ihrer auszubildenden Schweißnaht abzustrahlen, auf.

Mit der erfindungsgemäßen Vorrichtung können Werkstückoberflächen dem Schweißvorgang vorauseilend gereinigt und gekühlt werden.

Beim Beschuss der Werkstückoberfläche mit cryogenem Medium entstehen mehrere vorteilhafte Effekte. Neben dem zunächst erfolgenden mechanischen Abtragen von Trenn- bzw. Ziehmittelrückständen durch Abrasion ergibt sich eine starke punktuelle Abkühlung des bestrahlten Bereiches, woraus sich vorteilhafte Effekte für den nachfolgenden Schweißvorgang ergeben. Der Einzugsbereich der Schweißnaht wird vollständig von Verunreinigungen befreit, wodurch eine optimale Schweißnaht erzeugt werden kann. Durch die Kühlung des Einzugsbereichs der Schweißnaht möglichst unmittelbar vor dem Schweißvorgang, wird die Qualität der Schweißnaht zusätzlich verbessert und der Verzug am Werkstück wird minimiert, wodurch spätere Richtarbeiten reduziert werden bzw. zum Teil völlig entfallen können. Zudem geht das cryogene Medium beim Aufprall auf die Oberfläche unter Atmosphärendruck in den gasförmigen Zustand über, wobei eine ca. 600-fache Volumenvergrößerung des cryogenen Mediums stattfindet. Die dadurch entstehenden Gaswirbel entfernen die unterkühlten und versprödeten Trenn- bzw. Ziehmittelrückstände, ohne die Werkstückoberfläche zu beschädigen.

Insbesondere beim Schweißen von Aluminium ist das Herstellen sauberer Schweißnähte wichtig, da die Schweißnähte oft Sichtnähte sind, die nicht nachgearbeitet, d.h. poliert oder lackiert werden.

Die Erfindung wird beispielhaft anhand der Zeichnung erläutert. Es zeigen dabei schematisch.

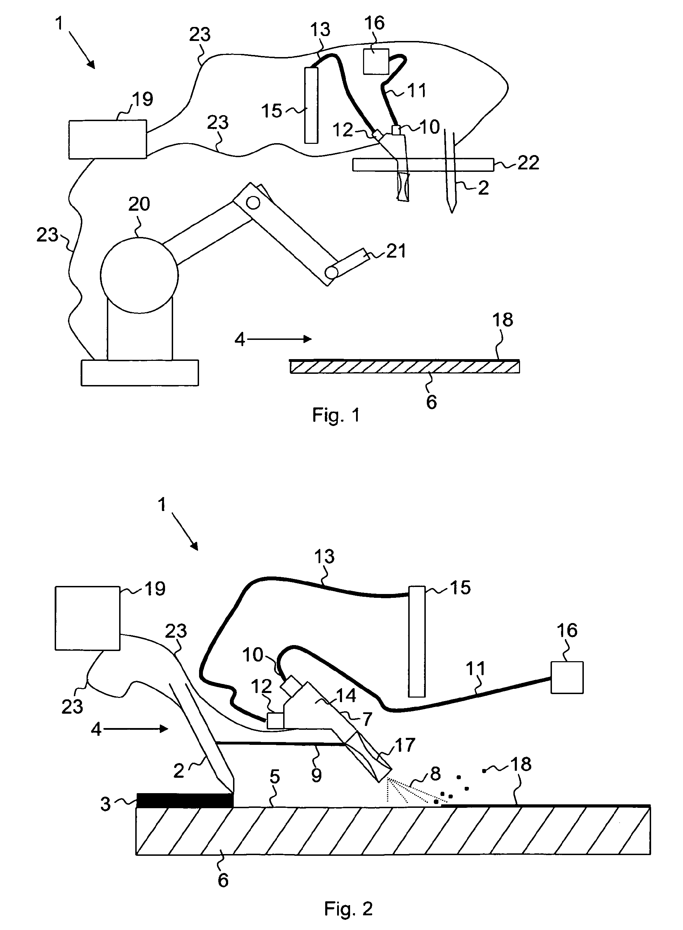

- Fig. 1: ein erstes Ausführungsbeispiel einer Schweißvorrichtung mit einem Roboter zum Handhaben einer Schweißeinrichtung und einer CO₂-Düse, und
- Fig. 2: ein zweites Ausführungsbeispiel einer Schweißvorrichtung mit einer der Schweißeinrichtung vorgeordneten CO₂-Düse.

Die erfindungsgemäße Schweißvorrichtung 1 gemäß einem ersten Ausführungsbeispiel umfasst einen Roboter 20 mit einem Wechselsystem 21. Das Wechselsystem 21 ist eine Aufnahme am Ende des Roboterarms, um verschiedene Werkzeuge aufzunehmen. Als Werkzeuge sind eine Schweißeinrichtung 2 und eine CO₂-Düse 7 vorgesehen, die vom Wechselsystem 21 des Roboters 10 aufgenommen werden. Die Werkzeuge 2, 7 sind in einem separaten Magazin 22 angeordnet.

Die Schweißvorrichtung 1 umfasst eine Steuereinrichtung 19 zur Ansteuerung des Roboters 20, des Wechselsystems 21 und der Werkzeuge 2, 7. Die Steuereinrichtung 19 ist mit dem Roboter 20, dem Wechselsystem 21 und den Werkzeugen 2, 7 über Datenleitungen 23 verbunden.

Die Schweißeinrichtung 2 kann beispielsweise als Einrichtung zum Schutzgasschweißen ausgebildet sein.

Die CO₂-Düse 7 bzw. Pistole gibt ein cryogenes CO₂-Pressluft-Gemisch 8 bzw. ein cryogenes Medium 8 aus. Insbesondere ist das cryogene Medium ein Trockeneisschnee-Pressluft-Gemisch. An der CO₂-Düse 7 ist über ein Pressluftventil 10 eine Pressluftleitung 11 und über ein CO₂-Ventil 12 eine CO₂-Leitung 13 angeschlossen. Beide Ventile 10, 12 münden in eine Mischkammer 14 der CO₂-Düse 7. In der Mischkammer 14 wird aus flüssigen CO₂ und/oder CO₂-Kaltgas und/oder CO₂-Pellets und/oder CO₂-Schnee und Pressluft ein cryogenes CO₂-Pressluft-Gemisch 8 erzeugt.

Die Pressluftleitung 11 ist mit einer Pressluftversorgung 16 verbunden. Die CO₂-Leitung 13 ist an einen CO₂-Vorratsbehälter 15 angeschlossen.

Nach der Mischkammer 14 ist eine Lavaldüse 17 angeordnet. Mittels der Lavaldüse 17 wird das cryogene CO₂-Pressluft-Gemisch 8 auf annähernd Schallgeschwindigkeit beschleunigt.

Mit der Steuereinrichtung 19 kann die Ausbildung der Schweißnaht 4 und die Menge an ausgegebenem cryogenem CO₂-Pressluft-Gemisch gesteuert werden. Mit der Steuereinrichtung 19 werden die Bewegungen des Roboters 20 gesteuert.

Nachfolgend wird die Anwendung der oben beschriebenen Vorrichtung 1 beschrieben.

Die Steuereinrichtung 19 steuert den gesamten Arbeitsablauf der Schweißvorrichtung 1, indem sie entsprechend den Roboter 20, das Wechselsystem 21, die CO₂-Düse 7 und die Schweißeinrichtung 2 ansteuert.

Das Wechselsystem 21 des Roboters 20 entnimmt die CO₂-Düse 7 aus dem Magazin 22 und positioniert sie entsprechend über einer zu reinigenden Werkstücksoberfläche 5 eines Werkstücks 6.

Über die Steuereinrichtung 19 werden das CO₂-Ventil 12 und das Pressluftventil 10 an der CO₂-Düse 7 angesteuert. Pressluft und cryogenes CO₂ strömen in die Mischkammer 14 der CO₂-Düse 7 ein. In der Mischkammer 14 bildet sich das cryogene CO₂-Pressluft-Gemisch 8. Das cryogene CO₂-Pressluft-Gemisch wird beim Durchströmen der Lavaldüse 17 auf annähernd Schallgeschwindigkeit beschleunigt.

Beim Austritt aus der Lavaldüse 17 bzw. der CO₂-Düse 7 trifft das cryogene CO₂-Pressluft-Gemisch 8 auf das an einer Werkstückoberfläche 5 anhaftende Ziehmittel 18 und entfernt dieses, sodass eine saubere Werkstückoberfläche 5 bereitgestellt wird auf der eine hochwertige Schweißnaht 3 hergestellt werden kann. Der Roboter 20 verfährt die CO₂-Düse 7 in Schweißrichtung 4.

Zudem wird der Bereich in dem die Schweißnaht 3 ausgebildet wird abgekühlt, was zu einem geringeren Verzug des Werkstücks 6 führt.

Wenn der gesamte zu reinigende Bereich gereinigt wurde legt der Roboter 20 bzw. das Wechselsystem 21 die CO₂-Düse 7 wieder im Magazin 22 ab und entnimmt die Schweißeinrichtung 2 aus dem Magazin 22 und positioniert diese über dem gereinigten und gekühlten Bereich der Werkstückoberfläche 5. Die Schweißeinrichtung 2 wird dann von der Steuereinrichtung 19 angesteuert und beginnt mit der Herstellung einer Schweißnaht 3 in Schweißrichtung 4 auf der Werkstückoberfläche 5. Das Werkstück 6 ist beispielsweise ein tiefgezogenes Aluminiumbauteil.

Weiterhin kann vorgesehen sein die Schweißnaht 3 mit der CO₂-Düse 7 nachzubehandeln, um diese zu reinigen und/oder den Verzug zu minimieren.

In einem weiteren Ausführungsbeispiel weist die erfindungsgemäße Schweißvorrichtung 1 eine Schweißeinrichtung 2 auf. Die Schweißeinrichtung 2 kann beispielsweise als Einrichtung zum Schutzgasschweißen ausgebildet sein.

Die Schweißeinrichtung 2 erzeugt eine Schweißnaht 3 in Schweißrichtung 4 auf einer Werkstückoberfläche 5 eines Werkstücks 6. Das Werkstück 6 ist beispielsweise ein tiefgezogenes Aluminiumbauteil.

In Schweißrichtung 4 ist vor der Schweißeinrichtung 2 eine CO₂-Düse 7 zum Ausgeben eines cryogenen CO₂-Pressluft-Gemisches 8 angeordnet. Die CO₂-Düse 7 ist mit der Schweißeinrichtung 2 über ein Verbindungselement 9 verbunden. Der Abstand zwischen der Schweißeinrichtung 2 und der CO₂-Düse 7 beträgt zwischen 5 cm und 20 cm und vorzugsweise zwischen 5 cm und 10 cm.

An der CO₂-Düse 7 ist über ein Pressluftventil 10 eine Pressluftleitung 11 zum Zuführen von Pressluft und über ein CO₂-Ventil 12 eine Leitung 13 zum Zuführen von cryogenem CO₂ ausgebildet. Beide Anschlüsse münden in eine Mischkammer 14.

Über die CO₂-Leitung 13 wird aus einem CO₂-Vorratsbehälter 15 beispielsweise aus einer CO₂-Flasche cryogenes CO₂ in die Mischkammer 14 der CO₂-Düse 7 eingeleitet. Von einer Pressluftversorgungsquelle 16 wird Pressluft bereit gestellt, die über die Pressluftleitung 11 in die Mischkammer 14 eingeleitet wird. In der Mischkammer 14 entsteht aus dem cryogenem CO₂ und der Pressluft das cryogene CO₂-Pressluft-Gemisch 8.

Nach der Mischkammer 14 ist eine Lavaldüse 17 angeordnet. Mittels der Lavaldüse 17 wird das cryogene CO₂-Pressluft-Gemisch 8 auf annähernd Schallgeschwindigkeit beschleunigt und anschließend auf die Werkstückoberfläche 5 gelenkt.

Durch das ausgestrahlte cryogene CO₂-Pressluft-Gemisch 8 wird der Bereich auf der Werkstückoberfläche 5, auf dem die Schweißnaht 3 erzeugt wird, von auf der Werkstückoberfläche 5 anhaftendem Ziehmittel 18 gereinigt.

Die Schweißeinrichtung 2 und die CO₂-Düse 7 sind beide mit einer Steuereinrichtung 19 verbunden. Über die Steuereinrichtung 19 kann beispielsweise die Dicke der Schweißnaht 3 und die Menge an ausgegebenem cryogenen CO₂-Pressluft-Gemisch 8 gesteuert werden.

In einem weiteren Ausführungsbeispiel der erfindungsgemäßen Vorrichtung ist in Schweißrichtung 4 hinter der Schweißeinrichtung 2 eine zweite CO₂-Düse 7 angeordnet, um dem Schweißvorgang nachfolgend Oberflächenbeläge zu entfernen und um den Schweißbereich abzukühlen, um Verzüge im Werkstück zu verhindern. Dadurch kann vermieden werden, dass das Werkstück 6 nach dem Fügen gerichtet werden muss.

Die Schweißeinrichtung 2 kann auch als Vorrichtung zum Feuerschweißen, Gasschmelzschweißen, Lichtbogenhandschweißen, Widerstandsschweißen, Laserstrahlschweißen, aluminothermisches Schweißen, Reibschweißen oder Elektronenstrahlschweißen ausgebildet sein.

Die erfindungsgemäße Vorrichtung kann in der automatisierten Fertigungstechnik beispielsweise in Verbindung mit einem Roboter verwendet werden.

Das Werkstück kann aus beliebigem schweißbaren Metall sein.

Die erfindungsgemäße Vorrichtung kann auch als Handgerät ausgebildet sein.

Die erfindungsgemäße Vorrichtung kann auch lediglich als CO₂-Düse als Aufsatz für eine bestehende Schweißeinrichtung ausgebildet sein.

Nachfolgend wird die Anwendung der oben beschriebenen Vorrichtung 1 zur CO₂ Reinigung beim Fügen von Metallen erläutert.

Über die Steuereinrichtung 19 werden das CO₂-Ventil 12 und das Pressluftventil 10 an der CO₂-Düse 7 geöffnet. Pressluft und flüssiges CO₂ strömen in die Mischkammer 14 der CO₂-Düse 7 ein. In der Mischkammer 14 bildet sich ein cryogenes CO₂-Pressluft-Gemisch 8. Das cryogene CO₂-Pressluft-Gemisch 8 wird beim Durchströmen der Lavaldüse 17 auf annähernd Schallgeschwindigkeit beschleunigt.

Beim Austritt aus der Lavaldüse 17 trifft das cryogene CO₂-Pressluft-Gemisch 8 auf das an den Werkstückoberflächen 5 anhaftende Ziehmittel 18 und entfernt dieses, sodass eine hochwertige Schweißnaht 3 hergestellt werden kann. Zudem wird der Bereich in dem die Schweißnaht 3 ausgebildet wird abgekühlt, was zu geringerem Verzug des Werkstücks 6 führt.

Die Vorrichtung 1 wird beispielsweise vollautomatisch von einem Roboter in Schweißrichtung bewegt. Wenn die Schweißeinrichtung 2 sich über dem gereinigten und gekühlten Bereich der Werkstückoberfläche 5 befindet, wird die Schweißeinrichtung 2 von der Steuereinrichtung 19 angesteuert und beginnt mit der Herstellung einer Schweißnaht 3 auf der Werkstückoberfläche 5.

Wenn der Schweißvorgang abgeschlossen ist kann vorgesehen sein die erfindungsgemäße Vorrichtung, beispielsweise den gesamten Verlauf der Schweißnaht 3 zurück, entgegen der Schweißrichtung 4 zu bewegen um den Bereich um die Schweißnaht 3 und die Schweißnaht 9 selbst zu kühlen um den Verzug zu minimieren und um Oberflächenbeläge zu entfernen.

Insbesondere beim Schweißen von Aluminium ist das Herstellen sauberer Schweißnähte und eine Nachreinigung wichtig, da die Schweißnähte oft Sichtnähte sind, die nicht nachgearbeitet, d.h. poliert oder lackiert werden müssen.

Als cryogenes CO₂-Pressluft-Gemisch ist insbesondere eine Mischung aus flüssigem CO₂ oder CO₂-Schnee oder CO₂-Pelletts oder gasförmigem CO₂ mit Pressluft vorgesehen.

Bei dem Schweißvorgang vorauseilenden Beschuss mit cryogenem Medium entstehen mehrere vorteilhafte Effekte. Neben dem zunächst erfolgenden mechanischen Abtragen von Trenn- bzw. Ziehmittelrückständen durch Abrasion ergibt sich eine starke punktuelle Abkühlung des bestrahlten Bereiches unmittelbar vor dem Schweißvorgang. Der Einzugsbereich der Schweißnaht wird vollständig von Verunreinigungen befreit, wodurch eine optimale Schweißnaht erzeugt werden kann. Durch die Kühlung des Einzugsbereich der Schweißnaht werden die Verzüge am Werkstück minimiert, wodurch spätere Richtarbeiten zum Teil völlig entfallen können. Zudem geht das cryogene Medium beim Aufprall auf die Oberfläche unter Atmosphärendruck in den gasförmigen Zustand über, wobei eine ca. 600-fache Volumenvergrößerung des cryogenen Mediums stattfindet. Die dadurch entstehenden Gaswirbel entfernen die unterkühlten und versprödeten Trenn- bzw. Ziehmittelrückstände, ohne die Werkstückoberfläche zu beschädigen.

Die erfindungsgemäße Vorrichtung kann wie folgt kurz zusammengefasst werden.

Erfindungsgemäß ist eine Schweißvorrichtung zum Schweißen von metallischen Werkstücken vorgesehen. Die Schweißvorrichtung weist eine Schweißeinrichtung zum Erzeugen einer Schweißnaht auf Werkstücken und eine Düse, um ein cryogenes Medium auf die Oberflächen der Werkstücke im Bereich ihrer auszubildenden Schweißnaht abzustrahlen, auf.

### Bezugszeichenliste

- 1: Schweißvorrichtung
- 2: Schweißeinrichtung
- 3: Schweißnaht
- 4: Schweißrichtung
- 5: Werkstückoberfläche
- 6: Werkstück
- 7: CO₂-Düse
- 8: cryogenes CO2-Pressluft-Gemisch
- 9: Verbindungselement
- 10: Pressluftventil
- 11: Pressluftleitung
- 12: CO₂-Ventil
- 13: CO₂-Leitung
- 14: Mischkammer
- 15: CO₂-Vorratsbehälter
- 16: Pressluftversorgung
- 17: Lavaldüse
- 18: Ziehmittel
- 19: Steuereinrichtung
- 20: Roboter
- 21: Wechselsystem
- 22: Magazin
- 23: Datenleitung

## Patentansprüche

1. Schweißvorrichtung zum Schweißen von metallischen Werkstücken, mit einer Schweißeinrichtung (2) zum Erzeugen einer Schweißnaht (3) auf Werkstücken (6) und einer Düse (7) , um ein cryogenes Medium (8) auf die Oberflächen (5) der Werkstücke (6) im Bereich ihrer auszubildenden Schweißnaht abzustrahlen.

2. Schweißvorrichtung gemäß Anspruch 1,
**dadurch gekennzeichnet,**
**dass** die Schweißvorrichtung (1) einen Schweiß-Roboter 20 umfasst.

3. Schweißvorrichtung nach Anspruch 1 oder 2,
**dadurch gekennzeichnet,**
**dass** am Roboter 20 ein Wechselsystem (21) ausgebildet ist, um ein Werkzeug aufzunehmen.

4. Schweißvorrichtung nach einem der Ansprüche 1 bis 3,
**dadurch gekennzeichnet,**
**dass** das Werkzeug eine CO₂-Düse (7) ist.

5. Schweißvorrichtung nach einem der Ansprüche 1 bis 4,
**dadurch gekennzeichnet,**
**dass** das Werkzeug eine Schweißeinrichtung (21) ist.

6. Schweißvorrichtung nach einem der Ansprüche 1 bis 5,
**dadurch gekennzeichnet,**
**dass** in Schweißrichtung (4) vor der Schweißeinrichtung (2) die Düse (7), zur Ausgabe des cryogenem Mediums (8), zum Reinigen, Kühlen und um den Verzug des Werkstücks (6) zu minimieren, angeordnet ist.

7. Schweißvorrichtung nach einem der Ansprüche 1 bis 6,
**dadurch gekennzeichnet,**
**dass** in Schweißrichtung (4) nach der Schweißeinrichtung (2) eine zweite Düse (7), zur Ausgabe des cryogenem Mediums (8), zum Reinigen, Kühlen und um den Verzug des Werkstücks (6) zu minimieren, angeordnet ist.

8. Schweißvorrichtung nach einem der Ansprüche 1 bis 7,
**dadurch gekennzeichnet,**
**dass** die Schweißeinrichtung (2) als Einrichtung zum Gasschmelzschweißen ausgebildet ist.

9. Schweißvorrichtung nach einem der Ansprüche 1 bis 8,
**dadurch gekennzeichnet,**
**dass** die Schweißeinrichtung (2) als Einrichtung zum Lichtbogenhandschweißen ausgebildet ist.

10. Schweißvorrichtung nach einem der Ansprüche 1 bis 9,
**dadurch gekennzeichnet,**
**dass** die Schweißeinrichtung (2) als Einrichtung zum Laserstrahlschweißen ausgebildet ist.

11. Schweißvorrichtung nach einem der Ansprüche 1 bis 10,
**dadurch gekennzeichnet,**
**dass** der Abstand zwischen der Schweißeinrichtung (2) und der Düse (7) zwischen 5 cm und 20 cm und vorzugsweise zwischen 5 cm und 10 cm beträgt.

12. Verfahren zum Schweißen von metallischen Werkstücken , wobei die Werkstücke (6) mit einem cryogenen (8) auf ihren Oberflächen (5) im Bereich ihrer auszubildenden Schweißnaht bestrahlt werden, um diesen Bereich zu reinigen und zu kühlen, und die Werkstücke in dem gereinigten Bereich miteinander verschweißt werden.

13. Verfahren nach Anspruch 12,
**dadurch gekennzeichnet,**
**dass** die von der Schweißvorrichtung (1) erzeugte Schweißnaht (3) nachfolgend von einer zweiten Düse (7) gereinigt wird und der Verzug des Werkstücks (6) durch Kühlung reduziert wird.

14. Verfahren nach Anspruch 12 oder 13,
**dadurch gekennzeichnet,**
**dass** als cryogenes Medium (8) ein cryogenes CO₂-Pressluft-Gemisch abgestrahlt wird.

15. Verfahren nach einem der Ansprüche 12 bis 14
**dadurch gekennzeichnet,**
**dass** als CO₂ im cryogenen CO₂-Pressluft-Gemisch (8) flüssiges CO₂ oder CO₂-Schnee oder CO₂-Pellets oder gasförmiges CO₂ verwendet wird.

16. Verfahren nach einem der Ansprüche 12 bis 14,
**dadurch gekennzeichnet,**
**dass** die Schweißvorrichtung (1) zum Schweißen von tiefgezogenen Bauteilen verwendet wird.
